# EUROPEAN PATENT APPLICATION

(11) **EP 4 265 950 A1**
(43) Date of publication of application: **25.10.2023**
(21) Application number: 23168966.2
(22) Date of filing: 20.04.2023
(51) Int. Cl.: F16L 3/02, F16L 3/22, F16L 3/24

(54) **SUPPORT DEVICE, SET OF SUPPORT DEVICES AND SYSTEM FOR MOUNTING A PLURALITY OF PIPES**

(30) Priority: 20.04.2022 EP 22169103
(71) Applicant: Armacell Enterprise GmbH & Co. KG, 12529 Schönefeld OT Waltersdorf (DE)
(72) Inventor: BOUDREAU, Martin, Quebec, J0T 1L0 (CA)
(74) Representative: Vossius & Partner Patentanwälte Rechtsanwälte mbB

(57) **Abstract**

The present disclosure relates to a support device (10A) for supporting at least one pipe, including a support body (12) defining at least one support surface (14) configured to support at least a first section of a first pipe in a mounted state of the support device (10A) and at least one interconnecting device (24C-24D) provided on the support body (12) and configured to be connected to a counter interconnecting device (24A-24D) provided on at least one separate supplemental support device (10B-10E) to interconnect the support device (10A) and the supplemental support device (10B-10E). The supplemental support device (10B-10E) is configured to support at least a section of a second pipe or a second pipe section of the first pipe. The present disclosure also relates to a set of a plurality of support devices and a system for mounting a plurality of pipes.

## Description

Pipes are widely used to transport a variety of different media, such as various types of liquids and/or gases, for a number of different applications. For instance, pipes may be used in industrial applications, e.g., to transport liquids and/or gases to and/or from an industrial environment, such as a manufacturing environment. Pipes may also be employed in a civil and/or residential environment, e.g., for providing cooling and/or heating, for instance, in an atmosphere within a building. Besides transporting gases and liquids, pipes may also be used to transport solid, or at least partially solid, goods, such as granulates and/or powder. A combination of at least two of liquid, gas and solid media may also be transported by pipes.

In many cases, the media being conducted in the pipes is transported a considerable distance from a first location, e.g., a source of the respective medium, to at least a second location, e.g., a consuming device which consumes and/or utilizes the respective medium, and/or vice versa. Thus, the pipes may be guided through one or more environments in order to transport the media between the desired locations.

Pipes are generally secured in the respective environments, through which the medium is transported via the pipes, by mounting the pipes to an external support structure to support the pipes and absorb one or more forces acting on the pipes, such as the weight of the pipes themselves, the weight of the medium/media being transported and/or further forces which may be exerted on the pipes, such as vibrations and/or pressure forces which are exerted to the pipes by the medium/media being transported in the pipes.

In most pipe guiding environments, a plurality of pipes or pipe sections are led through the respective pipe guiding environment to transport a plurality of media therethrough. In at least some applications, a relatively large number of pipes, e.g., sometimes ten pipes or more, may be guided through one or more pipe guiding environments. Therefore, it would be advantageous to facilitate the process of installing the respective pipes in the respective pipe guiding environment. A variety of different installation systems for securing pipes is known from the prior art. However, there remains a need for further improving the installation, in particular the securing of pipes.

It is therefore an object of the invention to provide a pipe support which improves and/or facilitates the installation of pipes.

This object is achieved by a support device which is defined by the features of claim 1. Further developments and variations are defined by the features of the dependent claims.

The support device is configured for supporting at least one pipe and includes a support body defining at least one support surface configured to support at least a first section of a first pipe in a mounted state of the support device. The support body may be configured to support the first section of the first pipe in an arrangement in which the first pipe extends substantially horizontally, i.e., substantially perpendicularly to the direction of gravity, in a mounted state of the support device. Preferably, in such an arrangement the support surface supports the first section of the first pipe by providing a support force which acts substantially against the direction of gravity. Thus, such a support force may provide support against the weight of the pipe itself and/or the weight of the medium/media being transported in the pipe, in an operative state of the pipe.

Alternatively, or additionally, the support body may be configured to support the first section of the first pipe in an arrangement in which the first pipe extends substantially vertically, i.e., substantially along the direction of gravity, in a mounted state of the support device. Preferably, in such an arrangement the support surface supports the first section of the first pipe by providing a support force which acts substantially perpendicularly to the direction of gravity. Such a support force may provide support against lateral movement of the pipes, i.e., movement in a direction which is substantially perpendicular to a longitudinal axis of the pipe, the longitudinal axis preferably extending in the direction of transportation of the medium/media being transported in the first pipe, when the first pipe is in operation. Such lateral movement may be effected by an expansion of the medium/media being transported in the first pipe and/or by vibration of the first pipe. Alternatively, or additionally, the support body may be configured to support the first section of the first pipe in an arrangement in which the first pipe is oriented between a vertical and a horizontal orientation, e.g., in which the first pipe extends at a 45° angle relative to a horizontal plane.

Preferably, the support body has, at least in a section thereof, a saddle-type configuration which preferably at least partially envelops the first section of the first pipe. The support body may be made of a variety of materials. Preferably, the support body is made of a plastic material and/or a composite material, such as a plastic material containing fiberglass and/or carbon fibers. The support body may include at least one thermal insulation material integrated in the support body. For instance, the thermal insulation material may be fixedly attached to the support body. Preferably, the thermal insulation material is arranged on a surface of the support body which at least partially faces the first section of the first pipe.

The support body may define at least one pipe section receiving portion which has at least one pipe section receiving space configured to at least partially receive the first section of the first pipe therein. Preferably, the support surface of the support body defines at least a portion of the pipe section receiving portion. Preferably, the support body is configured such that a surface of the support body, said surface at least partially defining the pipe section receiving portion, envelops a portion of an outer circumference of the first section of the first pipe, preferably from 10% to 60%, more preferably from 20% to 50%, more preferably from 25% to 50%, most preferably from 30% to 50%, of the outer circumference of the first section of the first pipe, when the support device is in a mounted state, i.e., when the first pipe is supported by the support device. Preferably, the support surface defines at least a portion of the enveloping surface of the support body. Preferably, the pipe section receiving portion has an insertion gap which connects the pipe section receiving space to an exterior such that the pipe section receiving space is open to the exterior via the insertion gap to allow the first section of the first pipe to be inserted into the pipe section receiving portion via the insertion gap, preferably in a direction which is substantially perpendicular to a longitudinal axis of the first pipe, the longitudinal axis preferably extending along a direction of transportation of the medium/media being transported in the first pipe, when the first pipe is in operation. Preferably, the insertion gap is arranged substantially opposite, preferably diametrically opposite, from the support surface.

Preferably, the support surface is configured in a substantially half-pipe shape and/or in a substantially U-shape and/or substantially concave, with respect to a direction which extends from the support surface towards the first section of the first pipe when the first pipe is supported by the support device.

Preferably, the support body is configured such that the first section of the first pipe rests on the support surface, e.g., to support the first section of the first pipe against forces which act in a direction which is substantially perpendicular to a longitudinal axis of the first pipe, e.g., gravitational forces and/or vibrations of the first pipe. Thus, translational movement of the first pipe in at least one translational degree of movement, preferably at least along the longitudinal axis of the first pipe, may be allowed. This may allow movement of the first pipe, in particular in a direction which extends along the longitudinal axis of the first pipe. Such movement may be effected by vibrations of the first pipe and/or expansion of the medium/media being transported by the first pipe and/or longitudinal thrust forces exerted on the first pipe.

The support body may be configured to be connected, directly or indirectly, to an external support structure, such as a wall and/or overhead structure of a building and/or a rail-like structure which extends through at least a portion of an installation environment, such as a room or space of a building in which the support device is arranged.

The support body may be constructed integrally, i.e., as a one-piece construction. The support device may be constructed as a monolithic piece. Alternatively, the support body may include a plurality of individual components which are assembled, preferably in a reversable manner such that the individual components may be disassembled again. In particular, the support body may have a modular configuration such that the support body may be assembled individually from a variety of different available components, e.g., components having different varying sizes and/or geometries, depending on the respective application of the support device, e.g., depending on the number and/or dimensions and/or shape of the pipes to be supported.

The first pipe may be made of a variety of different materials, such as metal, e.g., copper, brass, steel or aluminium. The first pipe may alternatively be made of plastic, e.g., polyvinyl chloride (PVC), ceramic, glass or a composite material, such as including fiberglass or carbon fiber. The first pipe may have a wall which defines and at least partially encompasses a media transportation space therein, in which the various media are transported along a direction of transportation. The wall may have an interior surface, which may be in contact with the medium/media being transported in the pipe, and an exterior surface, which faces away from the interior surface. Preferably, the exterior surface of the wall is at least partially covered by at least one thermal insulation element configured to reduce heat transfer between the pipe and the environment and/or another object, such as the support device and/or a support structure, which the pipe is supported by.

The first pipe may have a variety of different sizes and/or geometries. For instance, the first pipe may have a circular or a polygonal, e.g., a square or pentagonal shaped, circumference in a cross-sectional view. The media transportation space of the first pipe may have various cross-sectional areas for transporting the respective medium/media. The first pipe may be configured to transport a variety of different types of media, e.g., gas, liquid and/or solid media. The first pipe may be configured to transport different types of media simultaneously and/or sequentially. For instance, the first pipe may be configured to transport a gas and a liquid simultaneously and/or sequentially. The first pipe may be configured to transport a medium which may at least partially change its phase, e.g., liquid to gas and/or vice versa, during transportation and/or in between transportation through the first pipe. For instance, the first pipe may be configured to transport a refrigerant which may be at least partially condensed and/or evaporated in the first pipe and/or in a separate device, e.g., in a condenser and evaporator, respectively, which may be arranged upstream or downstream of the first section of the first pipe. For instance, the first pipe may be configured to transport a refrigerant in a gas and/or liquid phase in a heating, ventilation, and air conditioning (HVAC) application and/or a heating, ventilation, air conditioning and refrigeration (HVAC-R) application. In particular, the first pipe may be configured as a part of a piping system for transporting at least one refrigerant in a variable refrigerant flow (VRF) system, which is also known as a variable refrigerant volume (VRV) system.

The first pipe may be configured to transport media which are pressurized at a variety of different pressure levels.

The support body may be configured to at least partially conform to an outer shape and/or outer dimension(s) of the first section of the first pipe. For instance, in the case of a substantially circular outer circumference of the first section of the first pipe, at least a portion of the support body, e.g., at least the support surface, may also be shaped substantially circularly (e.g., as an arc of a circle) or may at least have a curved shape to at least partially conform to an outer shape of the first section of the first pipe.

The support device further includes at least one interconnecting device provided on the support body and configured to be connected to a counter interconnecting device provided on at least one separate supplemental support device to interconnect the support device and the supplemental support device.

The interconnecting device may be configured to connect the support device and the supplemental support device in a side by side manner, i.e., in which the support device and the supplemental support device are arranged substantially adjacent to each other substantially along a direction which is substantially perpendicular to the direction of gravity. In such a side by side configuration, a longitudinal axis of the first section of the first pipe, which preferably extends along a direction of transportation of a medium which is transported in the first pipe when the first pipe is in operation, may extend substantially vertically, i.e., in the direction of gravity, or horizontally, i.e. substantially perpendicularly to the direction of gravity, when the support device is in a mounted state. The longitudinal axis of the first section of the first pipe may alternatively extend in a direction which lies between a vertical and a horizontal orientation, e.g., at a 45° angle relative to a horizontal plane.

Alternatively, or additionally, the interconnecting device may be configured to connect the support device and the supplemental support device in a stacked manner, i.e. in which the support device and the supplemental support device are arranged substantially adjacent to each other substantially along the direction of gravity, when the support device is in a mounted state. In such a stacked configuration, the longitudinal axis of the first section of the first pipe may extend substantially horizontally, i.e. substantially perpendicularly to the direction of gravity, when the support device is in a mounted state. The longitudinal axis of the first section of the first pipe may alternatively extend in a direction which lies between a vertical and a horizontal orientation, e.g., at a 45° angle relative to a horizontal plane.

The interconnecting device may be configured such that, in a first application, the interconnecting device may be configured to connect the support device and the supplemental support device in a side by side manner, as described above, and in a second application, the interconnecting device may be configured to connect the support device and the supplemental support device in a stacked manner, as described above, with or without modifying the support device and/or the supplemental support device between both applications.

The support device may be interconnected with a plurality of supplemental support devices in a side by side manner, i.e., horizontally, in one or more rows and/or in a stacked manner, i.e., vertically, in one or more columns.

The support device and the supplemental support device(s) may be substantially identical or at least similar. However, the support device and at least one supplemental support device may also be configured substantially differently and/or independently from each other, yet still be interconnectable via the interconnecting device.

Preferably, the interconnecting device may be provided with a quick-lock and/or quick-release mechanism to connect the support device and the supplemental support device via the quick-lock mechanism and/or to release the connection between the support device and the supplemental support device via the quick-release mechanism, respectively. This may enable the support device and the supplemental support device to be connected and/or disconnected via the interconnecting device relatively quickly and efficiently.

The support device and the supplemental support device may be configured as separate and/or distinct and/or non-monolithically formed components. The support device and the supplemental support device may be configured to be attachable to each other and/or detachable from each other, at least by means of the interconnecting device.

The supplemental support device is configured to support at least a section of a second pipe or a second pipe section of the first pipe. Thus, the supplemental support device may be configured to support a second pipe which is distinct from the first pipe. The first pipe and the second pipe may be connected, directly or indirectly. Alternatively, the supplemental support device may be configured to support a different section of the first pipe, i.e., a section which is downstream or upstream from the first section, with respect to a direction of transportation of the medium/media being transported in the first pipe when the first pipe is in an operative state. The first section of the first pipe and the section of the second pipe being supported by the supplementary support device, or respectively the second pipe section of the first pipe being supported by the supplementary support device, may extend substantially parallel to each other. Alternatively, the first section of the first pipe and the section of the second pipe, or the second pipe section of the first pipe, may extend at an angle to each other.

In existing pipe installations, individual pipes or pipe sections typically each have to be attached individually to a respective support structure via a respective attachment device. Thus, in case a relatively large number of pipes or pipe sections, e.g. ten or more, extend through a pipe guiding environment and must be secured in said pipe guiding environment, either multiple support structures must be provided or the pipes or pipe sections must be arranged according to the available support structure(s) which may limit the space efficiency of the arrangement of the pipes or pipe sections.

The support device described herein may allow two support devices, i.e., the support device and the supplemental support device, to be interconnected via the interconnecting device. This may allow a direct connection of at least one of the support devices, i.e., the support device or the supplemental support device, to be omitted. Instead, only one of the support device and the supplemental support device could be directly connected to an external support structure. The other of the support device and the supplemental support device may be connected indirectly to the external support structure via the support device or the supplemental support device, respectively. Alternatively, a direct connection of both of the support device and the supplemental support device may be omitted. In this case, the support device or the supplemental support device may be connected to a second supplemental support device via a second interconnecting device, the second supplemental support device being secured directly to the support structure.

Overall, the concept described herein may increase the packing density of the pipes or pipe sections by being able to arrange the pipes or pipe sections more densely, in particular since each support device no longer has to be connected directly to a support structure. Moreover, the dimensions of the support structure and/or the number of support structures may thus be reduced. This may reduce the installation space required for the installation of the pipes, thereby reducing the obtrusiveness of the pipe installation in the respective installation environment.

Alternatively, the support device and the supplemental support device (as well as one or more further support devices) may each be connected to the support structure. The interconnection of the support devices via the interconnecting structure may still be helpful in this case, e.g. because it facilitates assembly and/or adds stability to the overall arrangement.

Moreover, the configuration of the support device described herein may decrease installation efforts, e.g., installation time and/or labour costs. Moreover, the support device described herein may increase the ergonomics and user-friendliness of the process of securing pipes via the support device. Furthermore, pipe installations are in many cases arranged overhead which typically demands that the installer is at an elevated position and/or that the installer's arm(s) must reach overhead to access the pipe installation, which may make the installer susceptible to falling and/or injuries. Thus, by increasing the ergonomics and user-friendliness safety of the process of securing the pipes may be increased.

Moreover, due to the facilitation of the pipe installation, the risk of damage to the pipes or pipe sections being supported by the support device may be reduced. In particular, pipe insulation material is particularly susceptible to damage, e.g., insulation tear-off and/or compression, during installation. Thus, in case insulation is provided on the pipe sections to be supported by the support device described herein, the risk of damage to the insulation may be reduced by facilitating the pipe installation by means of the support device described herein.

In addition, the interconnective coupling of the support device with any number of supplementary support devices may provide added stability to the support devices. Furthermore, the coupled support devices may be moved as a coherent unit along the external structure, which may facilitate installation and/or deinstallation.

Preferably, the support device and/or the supplemental support device may be configured to be secured, directly or indirectly, to a support structure, such as a wall and/or overhead structure of a building or a rail-like structure which extends through an installation environment, in which the respective support device is arranged.

Preferably, the interconnecting device is configured to interconnect the support device and the supplemental support device such that the support device and the supplemental support device are arranged at different height levels after interconnection and in a mounted state of the support device. The height levels may be determined with respect to the direction of gravity. In other words, different height levels may be defined as relating to different positions of the support device and the supplemental support device along the direction of gravity. Thus, for instance, the support device may be defined as being at a lower height position than the supplemental support device when the support device is arranged further in the direction of gravity than the supplemental support device. Likewise, the support device may be defined as being at a higher height position than the supplemental support device when the supplemental support device is arranged further in the direction of gravity than the support device. Preferably, a plurality of support devices may thus be arranged in a column or a plurality of columns. Preferably, the interconnecting device provides at least four interconnection points, which are preferably spaced apart from each other.

By enabling the support device and the supplemental support device to be stacked at different height levels, the packing density of the pipes or pipe sections may be further increased, thereby reducing the obtrusiveness of the pipes or pipe sections in the respective installation environment. In particular, this may allow a relatively large number of pipes or pipe sections extending substantially horizontally, i.e., substantially perpendicularly to the direction of gravity, to be packed relatively close together, preferably relatively close to a ceiling or other overhead structure of a room or space of a building.

Preferably, the interconnecting device is configured to interconnect the support device and the supplemental support device such that the support device and the supplemental support device are arranged side by side, preferably at substantially the same height level, after interconnection and in a mounted state of the support device. Preferably, a plurality of support devices may thus be arranged in a row or a plurality of rows. Preferably, the interconnecting device provides at least two interconnection points, which are preferably spaced apart from each other. By enabling the support device and the supplemental support device to be arranged side by side, the packing density of the pipes or pipe sections may be increased in a horizontal direction, when the support device(s) is/are in a mounted state. This may reduce the obtrusiveness of the pipes or pipe sections in the respective installation environment.

Preferably, the interconnecting device includes an interconnecting element which is configured to engage a counter interconnecting element provided by the counter interconnecting device on the supplemental support device. The interconnecting element and the counter interconnecting element may be configured to interact with each other to prevent the support device and the supplemental support device from being disconnected from each other once the interconnecting element and the counter interconnecting element have become engaged. The interconnecting element and/or the counter interconnecting element may be configured to be actuated to allow the interconnecting element and the counter interconnecting element to disengage to allow the connection between the support device and the supplemental support device to be released.

Preferably, the interconnecting element is configured to be deflected as the interconnecting element is being connected to the counter interconnecting element. For instance, the interconnecting device may be configured as a deflectable clip or snap-in connection. After being deflected, the interconnecting element may snap into engagement with the counter interconnecting element. To release the engagement between the interconnecting element and the counter interconnecting element, the interconnecting element may be deflected again, e.g., manually by an installer. The deflectable nature of the interconnecting element may be achieved by configuring the interconnecting element to be at least partially flexible, e.g., by manufacturing the interconnecting element at least partially from a flexible material and/or by configuring the geometry and/or dimensions of the interconnecting element to allow deflections, e.g., by reducing a cross-section of the interconnecting element to allow bending.

Preferably, the interconnecting element is configured as a latching element, a snap-in element, a threaded element, a bayonet connection element, or an interference fit element. The above-identified types of interconnecting elements may provide means for connecting and/or the disconnecting the support device and the supplemental support device in a relatively quick and efficient manner to reduce or at least limit the efforts required to achieve the connection and/or disconnection of the support device and the supplemental support device. This may decrease labour costs and/or increase the ergonomics and user-friendliness of connecting and/or disconnecting the support device and the supplemental support device via the interconnecting device, as described above. The safety of the installer, as the installer is operating the interconnecting device, may also be increased.

The interconnecting element may give an installation feedback to the installer to indicate that a secure connection between the support device and the supplemental support device has been achieved. The installation feedback may include an acoustic feedback, such as a click sound, and/or a haptic feedback, such as a pulse generated within the support device as the interconnecting element engages with the counter interconnecting element which the installer can feel when touching the support device and/or the supplemental support device, and/or a visual feedback, such as the interconnecting element having a connected state which is visually distinguishable from a non-connected state of the interconnecting element by the human eye.

Preferably, the interconnecting element extends from the support body in a direction which is substantially perpendicular to a longitudinal axis of the pipe when the support device is in a mounted state and the pipe is supported by the support device. The longitudinal axis of the pipe may extend in a direction of transportation of a medium which is transported in the first pipe, when the first pipe is in operation. For instance, the interconnecting element may extend substantially vertically, i.e. along the direction of gravity, when the pipe extends substantially horizontally, i.e. perpendicularly to the direction of gravity. The interconnecting element may extend substantially horizontally, i.e. substantially perpendicularly to the direction of gravity, when the pipe extends substantially vertically, i.e. along the direction of gravity.

Providing that the interconnecting element extends from the support body in a direction which is substantially perpendicular to a longitudinal axis of the pipe, when the support device is in a mounted state and the pipe is supported by the support device, may facilitate coupling and/or decoupling the support device and the supplemental support device, in particular when the support device and the supplemental support device are arranged in a side by side or a stacked manner, as described above. Preferably, the interconnecting element extends from the support body in a direction which is substantially perpendicular to a longitudinal axis of the pipe by a predetermined distance, preferably a predetermined minimum distance, e.g., a distance of at least 2 cm, more preferably at least 3 cm, more preferably at least 4 cm, more preferably at least 5 cm, most preferably at least 6 cm. The interconnecting device preferably extends in a tab-like or latch-like manner from the support body in a direction which is substantially perpendicular to a longitudinal axis of the pipe. The interconnecting device may extend in a cantilevered manner from the support body in a direction which is substantially perpendicular to a longitudinal axis of the pipe.

Preferably, the interconnecting element is configured as a hook element including at least two sections, a first section of the at least two sections extending, preferably substantially perpendicularly, from the support body and a second section of the at least two sections extending, preferably substantially perpendicularly, from the first section. Preferably, a gap is formed between the second section and the support body configured to receive at least a section of a counter element provided on the supplemental support device to secure the support device and the supplemental support device to each other. Such a configuration of the interconnecting element may provide an efficient, secure and intuitive means for connecting the support device and the supplemental support device to each other. The hook element and the counter element may form a friction fit, such as an interference fit, and/or a positive locking connection. Preferably, the counter interconnecting device provided on the supplemental support device may also be configured as a hook element which is configured substantially identically, or at least similarly, to the hook element provided on the support device. Thus, the respective hook elements may be hooked into each other to connect the support device and the supplemental support device. The hook elements may be shaped and/or dimensioned such that the hook elements may be hooked into each other to connect the support device and the supplemental support device. For instance, as a non-exhaustive and non-limiting example, the hook elements may be formed as corresponding C-shaped or J-shaped sections on the support device and the supplemental support device, respectively.

Preferably, the interconnecting device is configured such that the support device and the supplemental support device are interconnected with each other by:
displacing the support device and the supplemental support device substantially parallel to each other as the interconnecting device is engaging the counter interconnecting device;
   and/or
displacing the support device and the supplemental support device towards each other as the interconnecting device is engaging the counter interconnecting device.

The above-described interconnecting mechanism(s) may allow an at least partial pre-mounting of the respective pipe or pipe section with the corresponding support device or supplemental support device, respectively, prior to engaging the interconnecting device with the counter interconnecting device. In particular, interconnecting the support device and the supplemental support device with each other by displacing the support device and the supplemental support device substantially parallel to each other as the interconnecting device is engaging the counter interconnecting device may allow the support device and the supplemental support device to simply be slid relatively to each other along the respective pipe, more specifically along a longitudinal axis of the respective pipe, to interconnect the support device and the supplemental support device with each other. Interconnecting the support device and the supplemental support device with each other by displacing the support device and the supplemental support device towards each other as the interconnecting device is engaging the counter interconnecting device may also allow a relatively simple and intuitive interconnection mechanism to interconnect the support device and the supplemental support device.

Preferably, the interconnecting device is configured such that the support device and the supplemental support device are interconnected with each other by displacing the support device and the supplemental support device relative and substantially parallel to each other in a direction which is substantially perpendicular to a longitudinal axis of the first pipe when supported by the support device. This does not mean that the first pipe has to be supported by the support device and the support device has to be in a mounted state while the support device and the supplemental support device are being interconnected. Instead, this merely provides a reference state with respect to the above-stated orientation of the longitudinal axis of the first pipe.

In other words, if the first pipe extends substantially horizontally, the support device and the supplemental support device may be interconnected with each other by displacing the support device and the supplemental support device vertically relative to each other. In other words, the support device and the supplemental support device may be interconnected with each other via an up-and-down movement of the support device and/or the supplemental support device. This may provide a relatively intuitive and easy way of interconnecting the support device and the supplemental support device, in particular in a side-by-side manner, i.e., to interconnect the support device and the supplemental support device laterally. Moreover, this may facilitate connecting the support device with at least one supplemental support device in a side-by-side manner and at least one further supplemental support device in a stacked manner substantially simultaneously and/or sequentially.

Preferably, the interconnecting device is configured such that, when the interconnecting device and the counter interconnecting device are connected, the support device and the supplemental support device may be displaceable relative to each other in a direction which is substantially perpendicular to a longitudinal axis of the pipe. In other words, if the pipe extends substantially horizontally, the support device and the supplemental support device may be displaceable vertically relative to each other.

Preferably, the interconnecting device is configured such that, when the interconnecting device and the counter interconnecting device are connected, the support device and the supplemental support device may be disconnected from each other by displacing the support device and the supplemental support device relative to each other in a direction which is substantially perpendicular to a longitudinal axis of the pipe, when the support device is in a mounted state and the pipe is supported by the support device. In other words, if the pipe extends substantially horizontally, the support device and the supplemental support device may be disconnected from each other by displacing the support device and the supplemental support device vertically relative to each other.

Alternatively, or additionally, the interconnecting device may be configured such that, when the interconnecting device and the counter interconnecting device are connected, the interconnecting device substantially prevents or at least inhibits movement of the support device and the supplemental support device longitudinally relative to each other, i.e., in a direction which extends substantially along a longitudinal axis of the first pipe, when the support device is in a mounted state and the first pipe is supported by the support device, preferably by a frictional connection and/or a positive connection (e.g., a form-fit connection) between the interconnecting device and the counter interconnecting device. In other words, if the first pipe extends substantially horizontally, the support device and the supplemental support device may be substantially immovable horizontally relative to each other. Preferably, the support device and the supplemental support device are configured to allow movement of the respective pipes and/or pipe sections relative to each other along a longitudinal axis of the first pipe, when the support device is in a mounted state and the respective pipes and/or pipe sections are supported by the support device and the supplemental support device, respectively. This may allow the pipes or pipe sections to move longitudinally relative to each other, e.g., movement effected by vibrations of the pipes or pipe sections and/or expansion of the medium/media being transported in the pipes or pipe sections and/or longitudinal thrust forces exerted on the pipes or pipe sections, while longitudinal movement of the support device and the supplemental support device relative to each other is substantially blocked by the interconnecting device.

Preferably, the interconnecting element is formed integrally and/or monolithically with the support body. This may reduce the time required to manufacture the support device and/or may increase the stability of the interconnecting element. For instance, the entire support body, i.e., including the interconnecting element, may be manufactured in a single manufacturing process (e.g., by injection molding) and/or step (e.g., a single injection molding step). Alternatively, the support body may be manufactured by a variety of other means and/or manufacturing processes, such as by additive manufacturing, e.g., 3D printing. The support body is preferably made of a plastic material, preferably by means of an injection molding process and/or additive manufacturing. Alternatively, the interconnecting element may be a separate component which may be attached to the support body via one or more connection means, e.g., via a mechanical connection, such as a latch, clip, or screw threading, or via a material bond, such as an adhesive connection.

Preferably, the interconnecting device includes at least two, preferably at least three, more preferably at least four, interconnecting elements which are distanced from each other and/or which extend from the support body substantially parallel to each other. Preferably, at least some, preferably all, of the interconnecting elements are formed integrally and/or monolithically with the support body. Alternatively, at least some of all of the interconnecting element may be separate components which may be attached to the support body via one or more connection means, e.g., via a mechanical connection, such as a latch, clip, or screw threading, or via a material bond, such as an adhesive connection. The distance between the interconnecting elements may be predetermined and/or standardized. Preferably, however, the support body and/or the interconnecting elements may be configured such that the distance between the interconnecting elements may be adjusted to accommodate different applications. The geometry and/or dimensions of the support surface may also be varied to accommodate pipes of different geometries and/or dimensions.

Preferably, at least two of the interconnecting elements are arranged:
substantially on opposite sides of the support body and preferably at least partially lie in a plane which extends substantially perpendicularly to a longitudinal axis of the pipe when the support device is in a mounted state and
the pipe is supported by the support device,
   and/or
such that at least a section of the support surface extends between the at least two interconnecting elements, wherein the at least two interconnecting elements preferably at least partially lie in a plane which extends substantially parallel to a longitudinal axis of the pipe when the support device is in a mounted state and the pipe is supported by the support device.

At least two interconnecting elements on opposite sides of the support body may be rotationally symmetric to each other, in particular with a 180° rotational symmetry. The symmetry may be about an axis that extends perpendicular to a longitudinal extension of the support body (i.e., perpendicular to the longitudinal axis of the pipe section) and through the gap. In other words, when the pipe support is mounted to receive a horizontally extending pipe section, the axis may extend vertically.

At least two interconnecting elements on opposite sides of the support body may be mirror symmetric to each other, in particular mirror symmetric about a plane which extends substantially parallel to the longitudinal extension of the support body (i.e., perpendicular to the longitudinal axis of the pipe section).

The above-described arrangement(s) of the interconnecting elements may enable a secure and reliable connection of the support device and the supplemental support device via the interconnecting elements. In particular, arranging at least two of the interconnecting elements substantially on opposite sides of the support body may provide a distributed load bearing by the interconnecting elements on both sides of the support body. Arranging the interconnecting elements such that at least a section of the support surface extends between the at least two interconnecting elements may also provide two load bearing points across at least a section of the support surface to more evenly distribute the load placed on the interconnecting elements by the pipe, e.g., the weight of the pipe and/or the weight of the medium/media being transported in the pipe.

Preferably, the support device includes at least two interconnecting devices which are each provided on the support body and configured to be connected to a respective counter interconnecting device, each counter interconnecting device being provided on a separate supplemental support device such that the support device is interconnectable to at least two separate supplemental support devices. Such an arrangement may allow at least three support devices to be interconnected to each other. This may further increase the flexibility in the installation of pipes and/or the packing density of the pipes or pipe sections. For instance, the three support devices may be arranged in a stacked manner at different height levels or in a side by side manner, as described above. A mixed arrangement is also possible in which a first and a second support device of the three support devices are arranged in a stacked manner at different height levels and a third of the three support devices is arranged in a side by side manner next to one of the first and second support devices.

Preferably, the interconnecting devices interconnect the support device and the supplemental support devices such that the support device and at least one supplemental support device are arranged at different height levels and the support device and at least one further supplemental support device are arranged side by side at substantially the same height level, after interconnection and in a mounted state of the support device.

Preferably, the support device includes at least three interconnecting devices which are each provided on the support body and configured to be connected to a respective counter interconnecting device, each counter interconnecting device being provided on a separate supplemental support device such that the support device is interconnectable to at least three separate supplemental support devices. Such an arrangement may allow at least four support devices to be interconnected to each other. This may further increase the flexibility in the installation of pipes and/or the packing density of the pipes or pipe sections. For instance, the four support devices may be arranged in a stacked manner at different height levels or in a side by side manner. A mixed arrangement is also possible in which at least two of the support devices are arranged in a stacked manner at different height levels and at least two of the support devices are arranged in a side by side manner.

Preferably, the interconnecting devices interconnect the support device and the supplemental support devices such that the support device and at least one supplemental support device are arranged at different height levels and the support device and at least two further supplemental support devices are arranged side by side at substantially the same height level, after interconnection and in a mounted state of the support device.

Preferably, the support device includes at least four interconnecting devices which are each provided on the support body and configured to be connected to a respective counter interconnecting device, each counter interconnecting device being provided on a separate supplemental support device such that the support device is interconnectable to at least four separate supplemental support devices. Such an arrangement may allow at least five support devices to be interconnected to each other. This may further increase the flexibility in the installation of pipes and/or the packing density of the pipes or pipe sections. For instance, the five support devices may be arranged in a stacked manner at different height levels or in a side by side manner. A mixed arrangement is also possible in which at least two of the support devices are arranged in a stacked manner at different height levels and at least two of the support devices are arranged in a side by side manner.

Preferably, the interconnecting devices interconnect the support device and the supplemental support devices such that the support device and at least two supplemental support device are each arranged at different height levels and the support device and at least two further supplemental support devices are arranged side by side at substantially the same height level, after interconnection and in a mounted state of the support device.

Preferably, the support device further includes at least one anchor device configured to secure the support device to an external structure, preferably a rail-like and/or beam like structure. The anchor device may be configured to directly or indirectly mount the support device to the external structure.

The anchor device may be configured to engage with a section of the external structure. For instance, the anchor device may be configured to from a friction connection and/or a positive locking connection with a section of the external structure. The anchor device may have a release mechanism which is actuatable by a user to release the connection between the anchor device and the external structure. Preferably, the anchor device is configured to be movable, in particular slidable, along the external structure. This may allow the position and/or orientation of the support device relative to the external structure to be adjusted after the anchor device has already been mounted on the external structure.

The geometry and/or dimensions of the external structure may vary depending on the application and/or the mounting situation and/or features of the pipe guiding environment in which the pipe to be supported by the support device is arranged. The external structure may be a rail or rail-like structure and/or a beam or a beam-like structure. The external structure (e.g., the rail or rail-like structure) may extend perpendicularly to a longitudinal axis of the pipe, when the pipe is supported by the support device. The longitudinal axis of the pipe may extend in a direction of transportation of a medium which is transported in the first pipe, when the first pipe is in operation. Alternatively, the external structure may be a wall or overhead structure of a room or space of a building or a plate-like element arranged in the pipe guiding environment.

Preferably, the anchor device includes at least one anchor element configured to engage with at least a section of the external structure to secure the support device to the external structure.

Preferably, the anchor element is configured to at least partially receive at least a section of the external structure to secure the support device to the external structure. The connection between the anchor element and the external structure may be configured as a friction connection and/or a positive locking connection.

Preferably, the anchor element is configured to be deflected as the anchor element is being connected to the external structure. The connection between the anchor element external structure may be released by deflecting the anchor element again, e.g., manually by a user.

Preferably, the anchor element is configured as a latching element, a snap-in element, a threaded element, a bayonet connection element, or an interference fit element.

The anchor device may provide for a snap-fit connection with the external structure. The anchor device may be configured to snap onto the external structure.

Preferably, the anchor device includes at least one anchor receiving section provided on a portion of the support body, wherein the anchor receiving section is configured to engage with the anchor element to releasably attach the anchor element to the support body. Such a configuration may allow the anchor element to be connected to the support body on demand. Thus, if a particular support device is not to be mounted directly to the external structure via the anchor device, but rather instead via a further (supplemental) support device, then the anchor element may not be provided to that particular support device. This may allow a modular and selective configuration of each support device depending on the requirements for each support device. Moreover, such a detachable anchor element may allow the anchor element to be pre-mounted to the external structure while the support body is detached from the anchor element and/or for the support body to be detached from the anchor element while the anchor element remains mounted on the external structure. Furthermore, a variety of different anchor elements, e.g., having different attachment interfaces and/or attachment mechanisms, for attachment to the external structure may be provided. Thus, an anchor element which is suitable for connection with a respective external structure may be selected and mounted to the support body. Thus, for instance, the support device may be used for a wide variety of differently configured external structures, e.g., rails or rail-like structures having different geometries and/or dimensions and/or connection interfaces.

Preferably, the anchor device is configured to be displaced, preferably slid, along at least a section of the external structure, preferably a rail-like structure, when the anchor device is mounted to the external structure.

Preferably, the support surface extends in a direction which is substantially parallel to a longitudinal axis of the pipe, when the support device is in a mounted state and the pipe is supported by the support device, by 30 mm to 500 mm, preferably by 35 mm to 450 mm, more preferably by 40 mm to 400 mm, more preferably by 50 mm to 350 mm, more preferably by 55 mm to 300 mm, more preferably by 60 mm to 275 mm, more preferably by 65 mm to 250mm, more preferably by 70 mm to 225 mm, more preferably by 70 mm to 200 mm, most preferably by 70 mm to 175 mm.

Preferably, the support surface is configured to encompass at least 20%, preferably at least 25%, more preferably at least 30%, more preferably at least 35%, more preferably at least 40%, more preferably at least 45%, most preferably at least 50%, of an outer circumference of the pipe along at least a section of the pipe in a mounted state of the support device.

Preferably, the support surface is configured to encompass from 20% to 60%, preferably from 25% to 60%, more preferably from 30% to 60%, more preferably from 35% to 60%, more preferably from 40% to 60%, most preferably from 45% to 55%, of an outer circumference of the pipe along at least a section of the pipe in a mounted state of the support device.

The object discussed above is also achieved by a set of a plurality of support devices which is defined by the features of independent claim 14. Further developments and variations are defined by the features of the respective dependent claims.

The configurations and advantages as detailed above with respect to the support device apply accordingly to the set of support devices.

Each support device of the set of support devices may be configured according to any of the embodiments described herein. The support devices are interconnected with each other and arranged in a matrix-like manner.

Preferably, the set of support devices includes at least one row of at least two interconnected support devices arranged substantially side by side, preferably at substantially the same height level, in a mounted state of the set of support devices.

Preferably, the set of support devices includes at least one column of at least two interconnected support devices, wherein the support devices are arranged at different height levels in a mounted state of the set of support devices.

Preferably, the plurality of support devices includes at least one first support device and at least one second support device, wherein the geometry and/or the dimensions of the support surface of the first support device is/are different from the geometry and/or the dimensions of the support surface of the second support device.

The object discussed at the beginning is also achieved by a system for mounting a plurality of pipes which is defined by the features of independent claim 15. Further developments and variations are defined by the features of the respective dependent claims.

The configurations and advantages as detailed above with respect to the support device apply accordingly to the system.

The system includes the set of support devices according to any of the embodiments described herein and a rail or rail-like structure on which the plurality of support devices is mounted.

The following list of aspects provides preferred embodiments of the invention:
1. A support device for supporting at least one pipe, including:
   a support body defining at least one support surface configured to support at least a first section of a first pipe in a mounted state of the support device; and
   at least one interconnecting device, which is preferably provided on the support body, the interconnecting device being configured to be connected to at least one counter interconnecting device provided on at least one separate supplemental support device to interconnect the support device and the supplemental support device, the supplemental support device being configured to support at least a section of a second pipe or a second pipe section of the first pipe.
2. The support device according to aspect 1, wherein the interconnecting device is configured to interconnect the support device and the supplemental support device such that the support device and the supplemental support device are arranged at different height levels after interconnection and in a mounted state of the support device.
3. The support device according to aspect 1 or 2, wherein the interconnecting device is configured to interconnect the support device and the supplemental support device such that the support device and the supplemental support device are arranged side by side, preferably at substantially the same height level, after interconnection and in a mounted state of the support device.
4. The support device according to any of the preceding aspects, wherein the interconnecting device includes at least one interconnecting element which is configured to engage at least one counter interconnecting element provided by the counter interconnecting device on the supplemental support device.
5. The support device according to aspect 4, wherein the interconnecting element is configured to be moved and/or rotated, preferably deflected, as the interconnecting element is being connected to the counter interconnecting element.
6. The support device according to aspect 4 or 5, wherein the interconnecting element is configured as a latching element, a snap-in element, a threaded element, a bayonet connection element, or an interference fit element.
7. The support device according to any of aspects 4 to 6, wherein the interconnecting element extends from the support body in a direction which is substantially perpendicular to a longitudinal axis of the pipe, when the support device is in a mounted state and the pipe is supported by the support device.
8. The support device according to any of the preceding aspects, wherein the interconnecting element is configured as a hook element including at least two sections, a first section of the at least two sections extending, preferably substantially perpendicularly, from the support body and a second section of the at least two sections extending, preferably substantially perpendicularly, from the first section, wherein a gap is formed between the second section and the support body configured to receive at least a section of a counter element provided on the supplemental support device to secure the support device and the supplemental support device to each other.
9. The support device according to any of the preceding aspects, wherein the interconnecting device is configured such that the support device and the supplemental support device are interconnected with each other by:
   displacing the support device and the supplemental support device along each other, preferably substantially parallel to each other, as the interconnecting device is engaging the counter interconnecting device;
      and/or
   displacing the support device and the supplemental support device at least partially towards each other as the interconnecting device is engaging the counter interconnecting device.
10. The support device according to any of aspects 4 to 9, wherein the interconnecting element is formed integrally and/or monolithically with the support body.
11. The support device according to any of aspects 4 to 10, wherein the interconnecting device includes at least two, preferably at least three, more preferably at least four, interconnecting elements which are distanced from each other and/or which extend from the support body substantially parallel to each other.
12. The support device according to aspect 11, wherein at least two of the interconnecting elements are arranged:
   substantially on opposite sides of the support body and preferably at least partially lie in a plane which extends substantially perpendicularly to a longitudinal axis of the pipe, when the support device is in a mounted state and the pipe is supported by the support device,
      and/or
   such that at least a section of the support surface extends between the at least two interconnecting elements, wherein the at least two interconnecting elements preferably at least partially lie in a plane which extends substantially parallel to a longitudinal axis of the pipe, when the support device is in a mounted state and the pipe is supported by the support device.
13. The support device according to any of the preceding aspects, including at least two interconnecting devices which are each provided on the support body and configured to be connected to a respective counter interconnecting device, each counter interconnecting device being provided on a separate supplemental support device such that the support device is interconnectable to at least two separate supplemental support devices.
14. The support device according to aspect 13, wherein the interconnecting devices interconnect the support device and the supplemental support devices such that the support device and at least one supplemental support device are arranged at different height levels and the support device and at least one further supplemental support device are arranged side by side at substantially the same height level, after interconnection and in a mounted state of the support device.
15. The support device according to any of the preceding aspects, including at least three interconnecting devices which are each provided on the support body and configured to be connected to a respective counter interconnecting device, each counter interconnecting device being provided on a separate supplemental support device such that the support device is interconnectable to at least three separate supplemental support devices.
16. The support device according to aspect 15, wherein the interconnecting devices interconnect the support device and the supplemental support devices such that the support device and at least one supplemental support device are arranged at different height levels and the support device and at least two further supplemental support devices are arranged side by side at substantially the same height level, after interconnection and in a mounted state of the support device.
17. The support device according to any of the preceding aspects, including at least four interconnecting devices which are each provided on the support body and configured to be connected to a respective counter interconnecting device, each counter interconnecting device being provided on a separate supplemental support device such that the support device is interconnectable to at least four separate supplemental support devices.
18. The support device according to aspect 17, wherein the interconnecting devices interconnect the support device and the supplemental support devices such that the support device and at least two supplemental support device are each arranged at different height levels and the support device and at least two further supplemental support devices are arranged side by side at substantially the same height level, after interconnection and in a mounted state of the support device.
19. The support device according to any of the preceding aspects, further including at least one anchor device configured to secure the support device to an external structure, preferably a rail-like structure.
20. The support device according to aspect 19, wherein the anchor device includes at least one anchor element configured to engage with at least a section of the external structure to secure the support device to the external structure.
21. The support device according to aspect 20, wherein the anchor element is configured to at least partially receive at least a section of the external structure to secure the support device to the external structure.
22. The support device according to aspect 20 or 21, wherein the anchor element is configured to be moved and/or rotated, preferably deflected, as the anchor element is being connected to the external structure.
23. The support device according to any of aspects 20 to 22, wherein the anchor element is configured as a latching element, a snap-in element, a threaded element, a bayonet connection element, or an interference fit element.
24. The support device according to any of aspects 19 to 23, wherein the anchor device includes at least one anchor receiving section provided on a portion of the support body, wherein the anchor receiving section is configured to engage with the anchor element to releasably attach the anchor element to the support body.
25. The support device according to any of aspects 19 to 24, wherein the anchor device is configured to be displaced, preferably slid, along at least a section of the external structure, preferably a rail-like structure, when the anchor device is mounted to the external structure.
26. The support device according to any of the preceding aspects, wherein the support surface extends in a direction which is substantially parallel to a longitudinal axis of the pipe, when the support device is in a mounted state and the pipe is supported by the support device, by 30 mm to 500 mm, preferably by 35 mm to 450 mm, more preferably by 40 mm to 400 mm, more preferably by 50 mm to 350 mm, more preferably by 55 mm to 300 mm, more preferably by 60 mm to 275 mm, more preferably by 65 mm to 250 mm, more preferably by 70 mm to 225 mm, more preferably by 70 mm to 200 mm, most preferably by 70 mm to 175 mm.
27. The support device according to any of the preceding aspects, wherein the support surface is configured to encompass at least 20%, preferably at least 25%, more preferably at least 30%, more preferably at least 35%, more preferably at least 40%, more preferably at least 45%, most preferably at least 50%, of an outer circumference of the pipe along at least a section of the pipe in a mounted state of the support device.
28. The support device according to any of the preceding aspects, wherein the support surface is configured to encompass from 20% to 60%, preferably from 25% to 60%, more preferably from 30% to 60%, more preferably from 35% to 60%, more preferably from 40% to 60%, most preferably from 45% to 55%, of an outer circumference of the pipe along at least a section of the pipe in a mounted state of the support device.
29. The support device according to any of the preceding aspects, wherein the interconnecting device is configured such that the support device and the supplemental support device are interconnected with each other by displacing the support device and the supplemental support device relative and substantially parallel to each other, preferably in a direction which is non-parallel to a longitudinal axis of the first pipe, preferably in a direction which is substantially perpendicular to a longitudinal axis of the first pipe, preferably when the support device is in a mounted state and the pipe is supported by the support device.
30. The support device according to any of the preceding aspects, wherein the interconnecting device is configured such that, when the interconnecting device and the counter interconnecting device are connected, the interconnecting device substantially prevents or at least inhibits movement of the support device and the supplemental support device relative to each other in a direction which extends substantially along a longitudinal axis of the first pipe, preferably when the support device is in a mounted state and the first pipe is supported by the support device.
31. The support device according to any of the preceding aspects, wherein the first pipe is configured to be movable in a direction along the longitudinal axis of the first pipe when supported by the support device.
32. A set of a plurality of support devices, each support device being configured according to any of the preceding aspects, wherein the support devices are interconnected with each other and are preferably arranged in a matrix-like manner.
33. The set of support devices according to aspect 32, including at least one row of at least two interconnected support devices arranged substantially side by side, preferably at substantially the same height level, in a mounted state of the set of support devices.
34. The set of support devices according to aspect 32 or 33, including at least one column of at least two interconnected support devices, wherein the support devices are arranged at different height levels in a mounted state of the set of support devices.
35. The set of support devices according to any of aspects 32 to 34, wherein the plurality of support devices includes at least one first support device and at least one second support device, wherein the geometry and/or the dimensions of the support surface of the first support device is different from the geometry and/or the dimensions of the support surface of the second support device.
36. A system for mounting a plurality of pipes, the system including the set of support devices according to any of aspects 32 to 35 and a rail or rail-like structure on which the plurality of support devices is mounted.

Embodiments of the present disclosure are further elucidated below with reference to the figures. The figures are schematic drawings and as such may not show all details of the systems and their components. Particularly, the drawings are not necessarily to scale, and the shown dimensions are only exemplary and may vary. The drawings illustrate exemplary embodiments to provide a thorough understanding of the present disclosure. The drawings are not intended to limit the scope of the invention, which is defined by the appended claims and is to include the equivalents thereof.
- Fig. 1: shows a perspective view of a support device according to a first embodiment;
- Fig. 2: shows a front view of the support device of Fig. 1;
- Fig. 3: shows a top view of the support device of Fig. 1;
- Fig. 4: shows a side view of the support device of Fig. 1;
- Fig. 5: shows a bottom view of the support device of Fig. 1;
- Fig. 6: shows a front view of a support device according to a second embodiment;
- Fig. 7: shows a perspective view of a system for mounting a plurality of pipes according to a first embodiment, wherein two support devices are interconnected;
- Fig. 8: shows a perspective view of the system of Fig. 7, wherein three support devices are interconnected;
- Fig. 9: shows a side view of the system of Fig. 8;
- Fig. 10: shows a perspective view of a system for mounting a plurality of pipes according to a second embodiment, wherein three support devices are interconnected;
- Fig. 11: shows a top view of the system of Fig. 10;
- Fig. 12: shows a perspective view of a system for mounting a plurality of pipes according to a third embodiment, wherein five support devices are interconnected;
- Fig. 13: shows a front view of the system of Fig. 12.

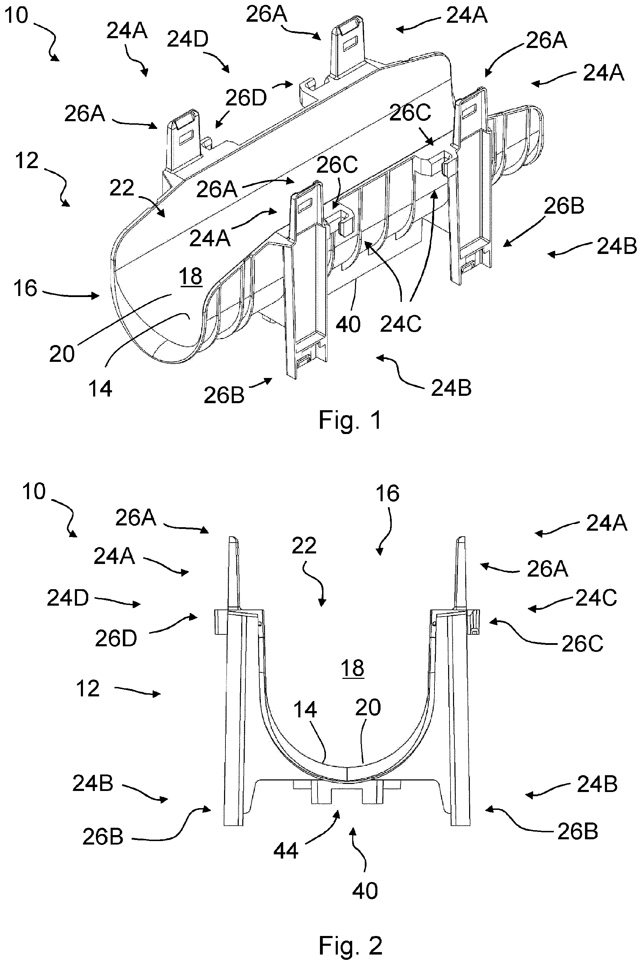

Figs. 1 to 5 show a support device 10 for supporting at least one pipe according to a first embodiment. The support device 10 includes a support body 12 which defines at least one support surface 14 configured to support at least a first section of a first pipe in a mounted state of the support device 10. The support body 12 may be configured to at least partially conform to an outer shape and/or outer dimension of the first section of the first pipe. In the case of the embodiment shown in the Figures, the support body 12 may be configured to conform to and accommodate a pipe which has an outer circumference which is substantially circular in a cross-section.

However, the support body 12 may be configured to conform to and accommodate pipes having various other geometries and/or dimensions. For instances, the support body 12 may be configured to conform to and accommodate pipes having outer circumferences which are polygonal shaped in a cross-section.

The support body 12 defines a pipe section receiving portion 16 which has a pipe section receiving space 18 configured to at least partially receive the first section of the first pipe therein. A longitudinal axis of the first pipe, which preferably extends along a direction of transportation of the medium/media being transported in the first pipe, may extend through the pipe section receiving space 18, when the support device 10 is in a mounted state. When the support device 10 is in the mounted state and the first section of the first pipe is received in the pipe section receiving space 18, an enveloping surface 20 of the support body 12 may envelop a portion of an outer circumference of the first section of the first pipe, preferably from 10% to 60%, more preferably from 20% to 50%, more preferably from 25% to 50%, most preferably from 30% to 50%, of the outer circumference.

The pipe section receiving portion 16 has an insertion gap 22 which connects the pipe section receiving space 18 to an exterior such that the pipe section receiving space 18 is open to the exterior via the insertion gap 22 to allow the first section of the first pipe to be inserted into the pipe section receiving portion 16 via the insertion gap 22, preferably in a direction which is substantially perpendicular to the longitudinal axis of the first pipe. The insertion gap 22 may be arranged substantially opposite, preferably diametrically opposite, from the support surface 14.

In other words, the pipe section receiving space 18 may be open towards the top.

According to the embodiments shown in the Figures, the support device 10 may be configured to support the first pipe in that the first pipe merely rests on the support surface 14. In particular, such a configuration may support the first section of the first pipe against forces which act in a direction which is substantially perpendicular to a longitudinal direction of the first pipe, e.g., gravitational forces or vibrations of the first pipe, whereas translational movement of the first pipe in at least one translational degree of movement, preferably in a direction along the longitudinal axis of the first pipe, may be permitted. This may allow movement of the first pipe, in particular in a direction which extends along a longitudinal axis of the first pipe. Such movement may be effected by vibrations of the first pipe and/or expansion of the medium/media being transported in the first pipe and/or longitudinal thrust forces exerted on the first pipe.

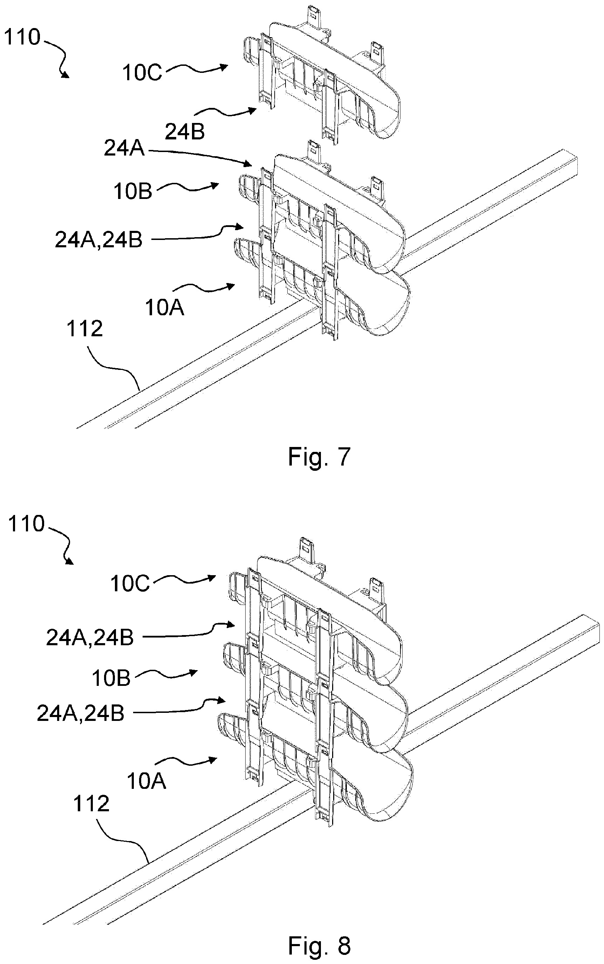

The support device 10 further includes four interconnecting devices 24A, 24B, 24C, 24D provided on the support body 12 and configured to be connected to a counter interconnecting device provided on at least one separate supplemental support device to interconnect the support device 10 and the supplemental support device. Such an interconnection between the support device 10 and a supplemental support device is shown in Figs. 7 to 13 and described in more detail further below in connection with said Figs. 7 to 13.

The interconnecting devices 24A, 24B, 24C, 24D may enable the support device 10 to be interconnected to four separate supplemental support devices. In particular, the interconnecting device 24A may enable a supplemental support device to be arranged at a height level which is above the support device 10 and the interconnecting device 24B may enable a supplemental support device to be arranged at a height level which is below the support device 10. Different height levels of the support devices may be determined with respect to the direction of gravity. In other words, different height levels may be defined as relating to different positions of the support device 10 and the respective supplemental support device along the direction of gravity, when the support device 10 and the supplemental support device are in a mounted state.

In other words, the interconnecting device 24A may enable a supplemental support device to be connected to the support device 10 from above. The interconnecting device 24B may enable a supplemental support device to be connected to the support device 10 from below.

The interconnection devices 24A, 24B are preferably configured to connect a supplemental support device to the support device 10 by approaching the support device 10 and the supplemental support device to each other in the vertical direction, as shown. Alternatively, the interconnection devices 24A, 24B may be configured to connect the supplemental support device to the support device 10 by approaching the support device 10 and the supplemental support device to each other in the horizontal direction.

In other words, the interconnecting devices 24A and 24B may enable a plurality of support devices to be arranged in a column or a plurality of columns along the direction of gravity, when the support device 10 and the supplemental support devices are in a mounted state.

The interconnecting devices 24C, 24D may enable two supplemental support devices to be arranged side by side next to the support device 10, e.g., adjacent to each other in a direction which is substantially perpendicular to the direction of gravity, when the support device 10 and the supplemental support devices are in a mounted state.

In other words, the interconnecting device 24C may enable a supplemental support device to be connected to the support device 10 on one lateral side (to the right side in Fig. 2). The interconnecting device 24D may enable a supplemental support device to be connected to the support device 10 on the opposite lateral side (to the left in Fig. 2).

In other words, the interconnecting devices 24C and 24D may enable a plurality of support devices to be arranged in a row or a plurality of rows perpendicular to the direction of gravity, when the support device 10 and the supplemental support devices are in a mounted state.

The interconnecting device 24A includes four interconnecting elements 26Awhich are each configured to engage counter interconnecting elements provided by the counter interconnecting device on the supplemental support device (see Figs. 7 to 13). The interconnecting elements 26A each extend from the support body 12 in a direction which is substantially perpendicular to a longitudinal axis of the pipe, when the support device 10 is in a mounted state and the pipe is supported by the support device 10.

Likewise, the interconnecting device 24B includes four interconnecting elements 26B which are each configured to engage counter interconnecting elements provided by the counter interconnecting device on the supplemental support device (see Figs. 7 to 13). The interconnecting elements 26B each extend from the support body 12 in a direction which is substantially perpendicular to a longitudinal axis of the pipe, when the support device 10 is in a mounted state and the pipe is supported by the support device 10.

In the embodiment shown in the Figures, the interconnecting elements 26A, 26B are configured as latching elements and/or snap fit elements which are configured to engage with respective counter interconnecting elements.

For example, the interconnecting elements 26A may be configured as male connectors which are configured to be at least partially inserted into, and preferably snap into, matching female connectors provided on the respective supplementary support device. The interconnecting elements 26B may be configured as female connectors which are configured to receive and engage with matching male connectors provided on the respective supplementary support device.

The counter interconnecting elements for interacting with the interconnecting elements 26A may be configured identically or similarly to the interconnecting elements 26B. Thus, the supplementary support device, or at least the counter interconnection elements thereof, may be configured substantially identically to the support device 10, or to the interconnection elements 26A, 26B, respectively, such that the counter interconnecting elements configured to interact with the interconnecting elements 26A may be configured as the interconnecting elements 26B and the counter interconnecting elements configured to interact with the interconnecting elements 26B may be configured as the interconnecting elements 26A. Thus, a plurality of interconnectable support devices may be configured similarly or identically.

As the skilled person will appreciate, the male/female connections may also be inversed, i.e. interconnecting elements 26A may be configured as female connectors and interconnecting elements 26B may be configured as male connectors.

As many support devices as desired and/or required by the respective application situation may be assembled to a set of interconnect support devices in a building block type manner to accommodate a wide variety of applications having different numbers of pipes. Alternatively, the interconnecting elements 26A and the counter interconnecting elements configured to interact with the interconnecting elements 26B and/or the interconnecting elements 26B and the counter interconnecting elements configured to interact with the interconnecting elements 26A, respectively, may be configured differently, e.g., having different geometries and/or dimensions.

Alternatively, the interconnecting elements 26A, 26B may be configured as interference fit elements.

The interconnecting elements 26A, 26B may be connected to the respective counter interconnecting elements by displacing the support device 10 and the supplemental support device towards each other as the respective interconnecting devices 24A, 24B are engaging the counter interconnecting devices, respectively.

The interconnecting devices 24C, 24D may be configured to provide for a form and/or a friction fit with the supplemental support device. The interconnecting devices 24C, 24D may be configured to be connected by approaching the support device 10 and the supplemental support device relative towards each other in a direction perpendicular to the longitudinal direction of the pipe. For example, the interconnecting devices 24C, 24D may be configured to be connected by approaching the support device 10 and the supplemental support device relative to each other in the vertical direction, as shown. The hook members shown may be particularly advantageous in this respect.

Alternatively, the interconnection devices 24C, 24D may be configured to connect the supplemental support device to the support device 10 by approaching the support device 10 and the supplemental support device to each other in the horizontal direction. This may be achieved, for example, by using snap-fit connectors for the interconnection device 24C and/or the interconnection device 24D.

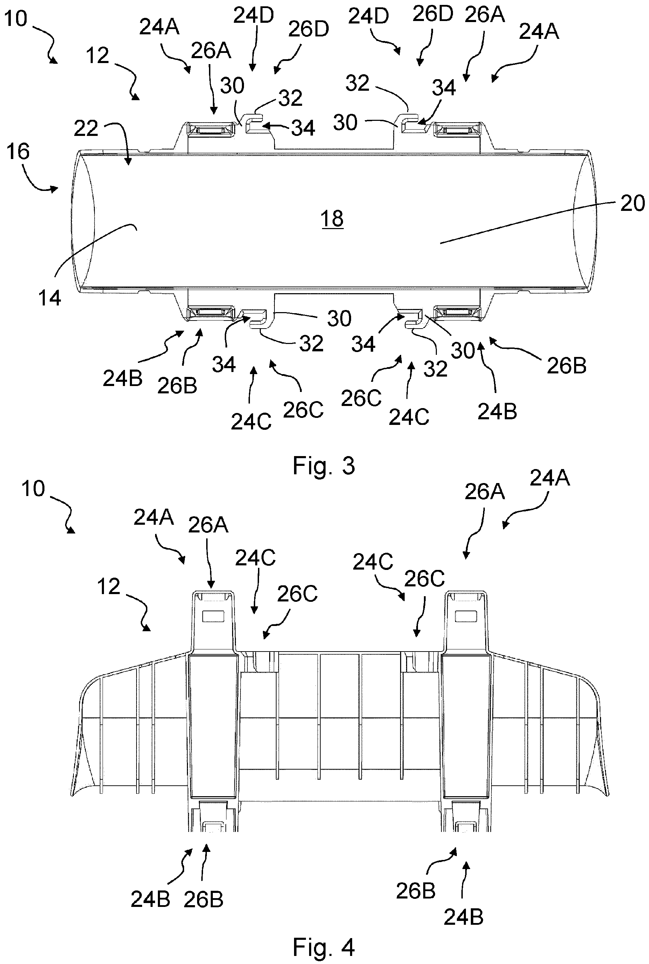

Each of the interconnecting devices 24C, 24D includes two interconnecting elements 26C, 26D which are each configured as a hook element which includes a first section 30 which extends substantially perpendicularly from the support body 12 and a second section 32 which extends preferably substantially perpendicularly from the first section 30 (see Fig. 3). In addition, the interconnecting elements 26C, 26D have a gap 34 which is formed between the second section 32 and the support body 12. The gap 34 is configured to receive at least a section of a counter element provided on the supplemental support device to secure the support device 10 and the supplemental support device to each other (see Figs. 7 to 13).

The counter interconnecting elements configured for interacting with the interconnecting elements 26C may be configured identically or similarly to the interconnecting elements 26D. Thus, the supplementary support device, or at least the counter interconnection elements thereof, may be configured substantially identically to the support device 10, or to the interconnection elements 26C, 26D, respectively, such that the counter interconnecting elements configured to interact with the interconnecting elements 26C may be configured as the interconnecting elements 26D and the counter interconnecting elements configured to interact with the interconnecting elements 26D may be configured as the interconnecting elements 26C. Thus, a plurality of interconnectable support devices may be configured similarly or identically. Alternatively, the interconnecting elements 26C and the counter interconnecting elements configured to interact with the interconnecting elements 26D and/or the interconnecting elements 26D and the counter interconnecting elements configured to interact with the interconnecting elements 26C, respectively, may be configured differently, e.g., having different geometries and/or dimensions.

The interconnecting elements 26C, 26D may be connected to the respective counter interconnecting elements by displacing the support device 10 and the supplemental support device substantially parallel to each other as the interconnecting elements 26C, 26D are engaging the counter interconnecting elements, respectively.

According to the embodiments shown in the Figures, the interconnecting elements 26A-26D are formed integrally and/or monolithically with the support body 12, i.e., as a one-piece construction. Thus, the entire support body 12, i.e., including the interconnecting elements 26A-26D, may be manufactured in a single manufacturing process. The support body 12 including the interconnecting elements 26A-26D is preferably made of a plastic material, preferably by means of an injection molding process. 3D printing may also be employed (e.g. of a plastic material or metal material). Alternatively, the interconnecting elements 26A-26D may be configured as separate components which may be assembled to the support body 12, e.g., via connection means, e.g., by a latch, clip or screw threading.

The interconnecting elements 26A-26D are distanced from each other, respectively. The distance between the respective interconnecting elements 26A-26D may be predetermined and/or standardized. Alternatively, the support body 12 and/or the interconnecting elements 26A-26D may be configured such that the distance between the respective interconnecting elements 26A-26D may be adjusted to accommodate different applications.

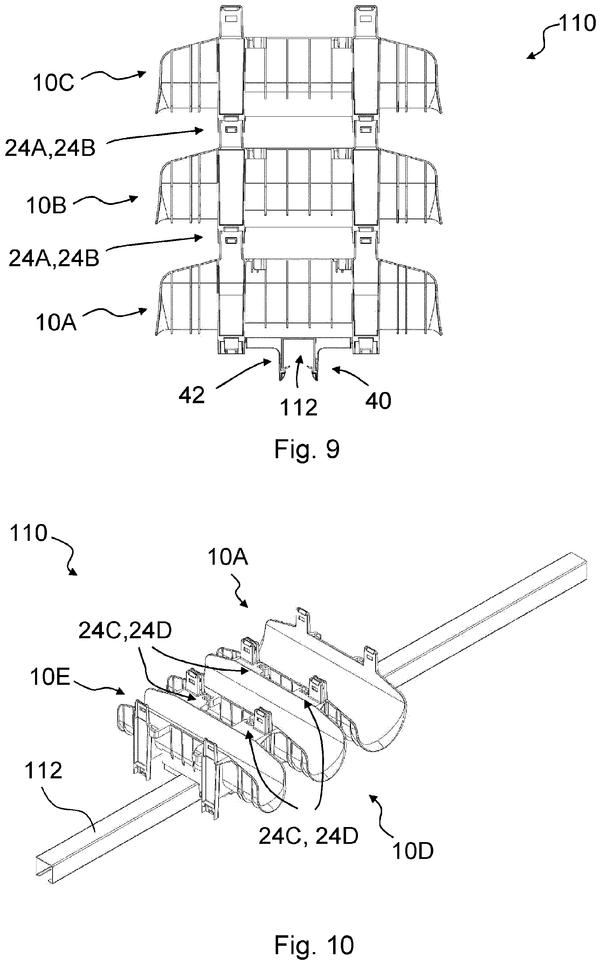

The support device 10 further includes an anchor device 40 configured to secure the support device 10 to an external structure, preferably a rail or a rail-like structure. The anchor device 40 includes an anchor element 42 (see Fig. 9) configured to engage with at least a section of the external structure to secure the support device 10 to the external structure and at least one anchor receiving section 44 provided on a portion of the support body 12. The anchor receiving section 44 is configured to engage with the anchor element 42 to releasably attach the anchor element 42 to the support body 12. The anchor device 40 may be configured to provide a snap-fit connection with the external structure, for example to snap onto the external structure, as shown in Fig. 9. Alternatively, the anchor device may be configured to be clamped or screwed onto the external structure.

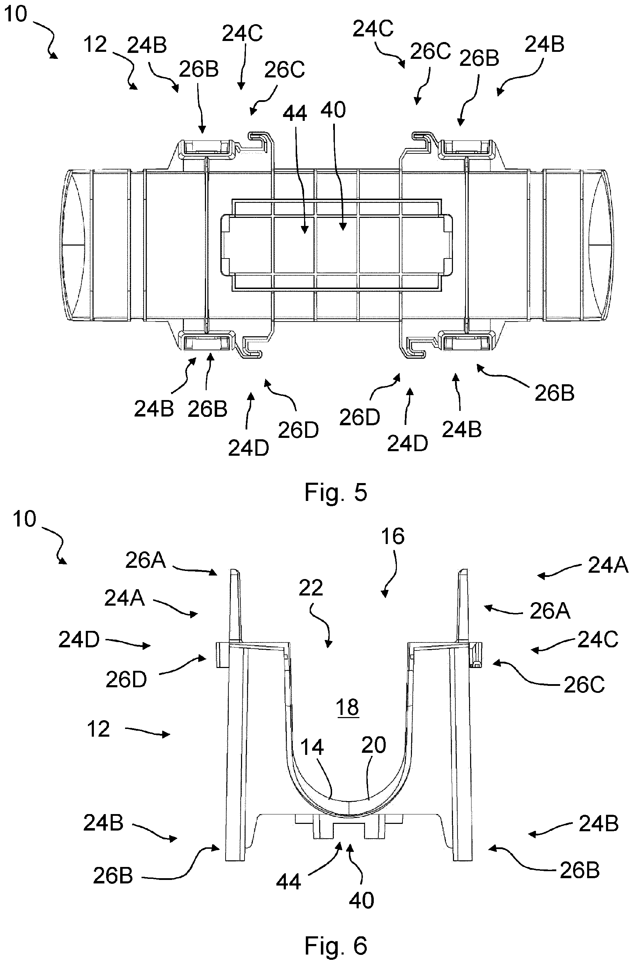

Fig. 6 shows a variation of the support device 10 in that the support device 10 shown in Fig. 6 is configured to accommodate a pipe having a smaller dimension in a direction traverse to a longitudinal axis of the pipe, e.g., a smaller diameter in the case of a circular shaped pipe, compared with the support device 10 shown in Figs. 1 to 5. Thus, the support device 10 may be configured individually to accommodate a wide variety of pipes having different geometries and/or dimensions. The support device 10 of Fig. 6 may be configured as a supplementary support device to be connected to the support device 10 according to the embodiment shown in Figs. 1 to 5. This would provide a set of interconnected support devices, wherein the support devices could accommodate pipes having different dimensions in a single installation.

As the person skilled in the art will appreciate, the configuration and/or spacing of the interconnecting elements 26A and 26B, and/or the interconnecting elements 26C and 26D, may be identical for the support device 10 of Fig. 1 and for the support device 10 of Fig. 6 despite the differently shaped and/or sized pipe section receiving space 18 and/or the differently shaped and/or sized enveloping surface 20. In this manner, supporting devices 10 for differently sized and/or shaped pipes may be connected to each other.

It will thus be appreciated that the present invention may also relate to a set of support devices 10, wherein at least two of the support devices 10 of the set differ from each other in the size and/or shape of the pipe section receiving space 18 and/or of the enveloping surface 20. Moreover, the invention may relate to a system including such set of support devices 10, wherein two support devices 10 that differ from each other in the size and/or shape of their pipe section receiving space 18 and/or of their enveloping surface 20 are connected to each other via the interconnecting elements 26A, 26B, 26C or 26D. Such sets/systems are shown in Figs. 9 through 13.

Figs. 7 shows a perspective view of a system 110 for mounting a plurality of pipes. The system 110 includes a set of support devices 10A-10C and a rail or rail-like structure 112 on which the plurality of support devices 10A-10C are mounted. In particular, one support device 10A is coupled to at least one first supplementary support device 10B by means of engagement of the interconnecting device 24A of the support device 10A and the interconnecting device 24B of the supplementary support device 10B, as shown in Figs. 1 to 6. At least one second supplementary support device 10C is in position to be connected to the supplementary support device 10B by means of engagement of the interconnecting device 24A of the supplementary support device 10B and the interconnecting device 24B of the second supplementary support device 10C.

In Fig. 8, the support device 10A, the first supplementary support device 10B and the second supplementary support device 10C are connected to each other. The configuration of Fig. 8 is shown in a side view in Fig. 9. As can be seen in Fig. 9, only the support device 10A is directly mounted on the external structure 112. The supplementary support devices 10B, 10C are connected to the external structure 112 merely via the support device 10A. Thus, the anchor elements 42 can be omitted from the supplementary support devices 10B, 10C. The external structure 112 may extend in a direction perpendicular to the longitudinal axis of the pipe, as shown in Figs. 7 and 8 (but a different extension is possible depending on the configuration of the anchor device 40).

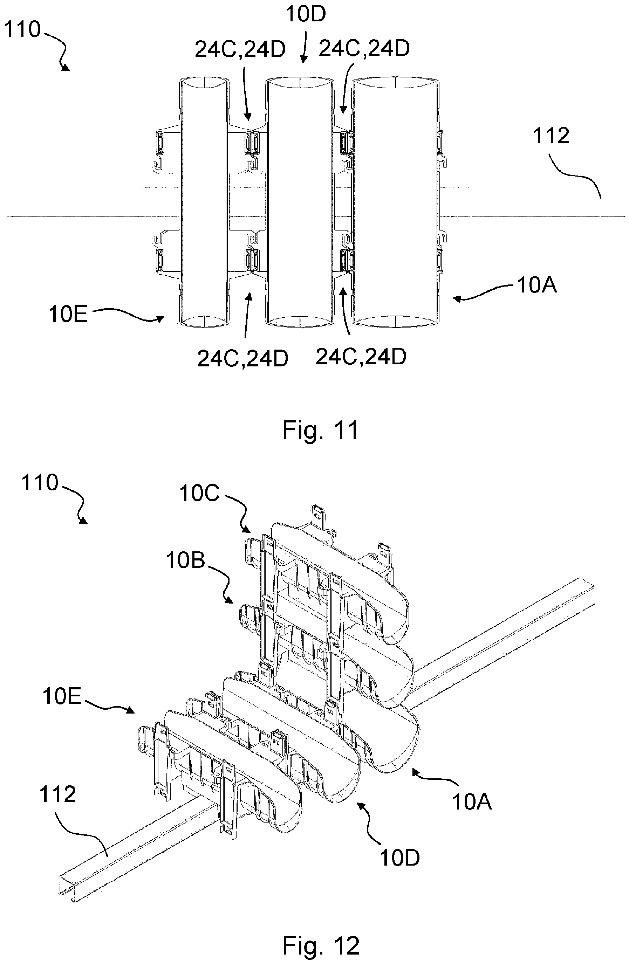

Figs. 10 and 11 show a variation of a system 110 for mounting a plurality of pipes. The system 110 according to the embodiment shown in Figs. 10 and 11 includes the support device 10A and at least two supplementary support devices 10D, 10E. In contrast to the embodiment shown in Figs. 7 to 10, in which the supplementary support devices 10B, 10C were arranged in a stacked manner on the support device 10, the supplementary support devices 10D, 10E of the embodiment according to Fig. 10 and 11 are arranged in a side by side manner by means of engagement of the interconnecting devices 24C, 24D, as shown in Figs. 1 to 6. In this case, each of the support device 10A, the first supplementary support device 10D, and the second supplementary support device 10E may be coupled to the external structure 112.

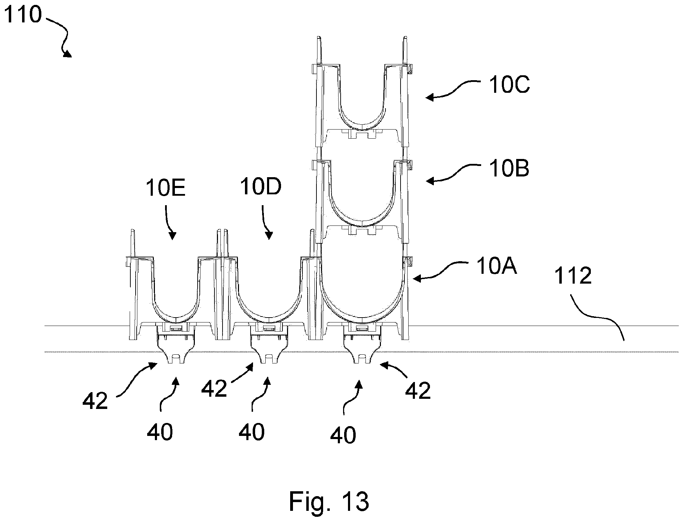

Figs. 12 and 13 show a variation of a system 110 for mounting a plurality of pipes. The system 110 according to the embodiment shown in Figs. 12 and 13 include the support device 10A and at least four supplementary support devices 10B, 10C, 10D, 10E. The supplementary support devices 10B, 10C are stacked on the support device 10A and the supplementary support devices 10D, 10E are arranged in a side by side manner next to the support device 10A. Thus, the configuration shown in Figs. 12 and 13 essentially embodies a combination of the arrangement shown in Figs. 7 to 9 and the arrangement shown in Figs. 10 and 11.

According to the embodiments shown in Figs. 7 to 13, the support devices 10A-10E are configured and/or arranged such that the pipe sections of the pipe(s) being supported by the respective support device 10A-10E extend substantially parallel to each other. Alternatively, the support devices 10A-10E may be configured and/or arranged such that at least some of the pipe sections of the pipe(s) being supported by the respective support device 10A-10E may extend at an angle to each other, i.e., in a non-parallel manner. For instance, the support devices 10A-10E may be configured such that at least a section of at least one first pipe may extend at a first angle, e.g., relative to a horizontal plane and/or a vertical plane, and at least a section of at least one second pipe may extend at a second angle, e.g., relative to a horizontal plane and/or a vertical plane, the first angle and the second angle being different. The support devices 10A-10E may be configured such that the angles, i.e., the first angle and/or the second angle, are adjustable, preferably within at least one angular range, preferably at least one predetermined angular range.

As evident from the shapes of the interconnecting devices 24A to 24D shown, i.a., in Figs. 7 to 12, the interconnecting devices 24A to 24D are configured such that, when two support devices are connected together, a movement of one of the connected support devices relative to the other of the connected support devices in a direction which extends substantially along a longitudinal axis of the supported pipe(s) is prevented. Meanwhile a longitudinal movement of the supported pipe(s) is allowed. In this manner, the support devices remain securely connected upon longitudinal movement of the pipes.

## Claims

1. A support device (10A) for supporting at least one pipe, including:
a support body (12) defining at least one support surface (14) configured to support at least a first section of a first pipe in a mounted state of the support device (10A); and
at least one interconnecting device (24A-24D) provided on the support body (12) and configured to be connected to a counter interconnecting device (24A-24D) provided on at least one separate supplemental support device (10B-10E) to interconnect the support device (10A) and the supplemental support device (10B-10E), the supplemental support device (10B-10E) being configured to support at least a section of a second pipe or a second pipe section of the first pipe;
wherein the interconnecting device (24A-24D) is configured such that, when the interconnecting device (24A-24D) and the counter interconnecting device (24A-24D) are connected, the interconnecting device (24A-24D) substantially prevents movement of the support device (10A) and the supplemental support device (10B-10E) relative to each other in a direction which extends substantially along a longitudinal axis of the first pipe when supported by the support device (10A).

2. The support device (10A) according to claim 1, wherein the interconnecting device (24A-24D) is configured to interconnect the support device (10A) and the supplemental support device (10B-10E) such that the support device (10A) and the supplemental support device (10B-10E) are arranged:
at different height levels after interconnection and in a mounted state of the support device (10A); and/or
side by side, preferably at substantially the same height level, after interconnection and in a mounted state of the support device (10A)
and/or
wherein the interconnecting device (24A-24D) is configured to interconnect the support device (10A) and a plurality of supplemental support devices (10B-10E) in a matrix with a plurality of rows and a plurality of columns.

3. The support device (10A) according to claim 1 or 2, wherein the interconnecting device (24A-24D) includes at least one interconnecting element (26A-26D) which is configured to engage at least one counter interconnecting element provided by the counter interconnecting device (24A-24D) on the supplemental support device (10B-10E).

4. The support device (10A) according to claim 3, wherein the interconnecting element (26A, 26B) extends from the support body (12) in a direction which is substantially perpendicular to a longitudinal axis of the pipe, when the support device (10A) is in a mounted state and the pipe is supported by the support device (10A).

5. The support device (10A) according to claim 3 or 4, wherein the interconnecting element (26C, 26D) is configured as a hook element including at least two sections (30, 32), a first section (30) of the at least two sections (30, 32) extending, preferably substantially perpendicularly, from the support body (12) and a second section (32) of the at least two sections extending (30, 32), preferably substantially perpendicularly, from the first section (30), wherein a gap (34) is formed between the second section (32) and the support body (12) configured to receive at least a section of a counter element (26C, 26D) provided on the supplemental support device (10D, 10E) to secure the support device (10A) and the supplemental support device (10D, 10E) to each other.

6. The support device (10A) according to any of the preceding claims, wherein the interconnecting device (24A-24D) is configured such that the support device (10A) and the supplemental support device (10B-10E) are interconnected with each other by displacing the support device (10A) and the supplemental support device (10B-10E) relative and/or substantially parallel to each other in a direction which is substantially perpendicular to a longitudinal axis of the first pipe, when the support device (10A) is in a mounted state and the pipe is supported by the support device (10A).

7. The support device (10A) according to any of claims 3 to 6, wherein the interconnecting element (26A-26D) is formed integrally and/or monolithically with the support body (12).

8. The support device (10A) according to any of claims 3 to 7, wherein the interconnecting device (24A-24D) includes at least two, preferably at least three, more preferably at least four, interconnecting elements (26A-26D) which are distanced from each other and/or which extend from the support body (12) substantially parallel to each other.

9. The support device (10A) according to claim 8, wherein at least two of the interconnecting elements (26A-26D) are arranged:
substantially on opposite sides of the support body (12) and preferably at least partially lie in a plane which extends substantially perpendicularly to a longitudinal axis of the pipe, when the support device (10A) is in a mounted state and the pipe is supported by the support device (10A),
and/or
such that at least a section of the support surface (14) extends between the at least two interconnecting elements (26A-26D), wherein the at least two interconnecting elements (26A-26D) preferably at least partially lie in a plane which extends substantially parallel to a longitudinal axis of the pipe, when the support device (10A) is in a mounted state and the pipe is supported by the support device (10A).

10. The support device (10A) according to any of the preceding claims, including at least two interconnecting devices (24A-24D), preferably at least three interconnecting devices (24A-24D), more preferably at least four interconnecting devices (24A-24D), which are each provided on the support body (12) and configured to be connected to a respective counter interconnecting device, each counter interconnecting device being provided on a separate supplemental support device (10B-10E) such that the support device (10A) is interconnectable to at least two separate supplemental support devices (10B-10E), preferably at least three separate supplemental support devices (10B-10E), more preferably at least four separate supplemental support devices (10B-10E).

11. The support device (10A) according to claim 10, wherein the interconnecting devices (24A-24D) interconnect the support device (10A) and the supplemental support devices (10B-10E) such that the support device (10A) and at least one supplemental support device (10B-10E), preferably at least two supplemental support devices (10B-10E), are each arranged at different height levels and the support device (10A) and at least one further supplemental support device (10B-10E), preferably at least two further supplemental support devices (10B-10E), are arranged side by side at substantially the same height level, after interconnection and in a mounted state of the support device (10A).

12. The support device (10A) according to any of the preceding claims, further including at least one anchor device (40) configured to secure the support device (10A) to an external structure, preferably a rail-like structure.

13. The support device (10A) according to claim 12, wherein the anchor device (40) includes at least one anchor element configured to engage with at least a section of the external structure to secure the support device (10A) to the external structure and at least one anchor receiving section provided on a portion of the support body (12), wherein the anchor receiving section is configured to engage with the anchor element to releasably attach the anchor element to the support body (12).

14. A set of a plurality of support devices (10A), each support device (10A) being configured according to any of the preceding claims, wherein the support devices (10A) are interconnected with each other and arranged in a matrix-like manner.

15. A system for mounting a plurality of pipes, the system including the set of support devices (10A-10E) according to claim 14 and a rail or rail-like structure on which the plurality of support devices (10A-10E) are mounted.
